# EUROPEAN PATENT APPLICATION

(11) **EP 2 015 125 A1**
(43) Date of publication of application: **14.01.2009**
(21) Application number: 07270036.2
(22) Date of filing: 09.07.2007
(51) Int. Cl.: G02B 26/08, G02B 26/06

(54) **Optically controlled deformable mirror**

(71) Applicant: BAE Systems plc, London SW1Y 5AD (GB)
(72) Inventor: Griffith, Michael Stewart BAE SYSTEMS, ATC,, Chelmsford, Essex, CM2 8HN (GB); Laycock, Leslie Charles BAE SYSTEMS, ATC,, Chelmsford, Essex, CM2 8HN (GB); Mccarthy, Andrew Graham BAE SYSTEMS, ATC,, Chelmsford, Essex, CM2 8HN (GB)
(74) Representative: BAE SYSTEMS plc Group IP Department

(57) **Abstract**

The present invention relates to an apparatus and to a method for deforming a deformable mirror. The apparatus (1) comprises a deformable mirror (2) having at least one reflective mirror surface (19), a plurality of electrically activatable actuators (15,16,17), said actuators being linked mechanically to move said reflective mirror surface(s) in order to deform said mirror, and a plurality of photodetectors (8, 10) for converting optical radiation incident on said photodetectors into corresponding electrical signals. The photodetectors, actuators and mirror are mechanically integrated and said photodetectors are individually optically addressable by means of optical radiation (22) incident on said photodetectors and are arranged to provide said electrical signals to said actuators so that said mirror may be controllably deformed in response to said incident optical radiation.

## Description

### BACKGROUND

### a. Field of the Invention

The present invention relates to an apparatus and a method for deforming a deformable mirror.

### b. Related Art

Deformable mirrors provide the most convenient means for controlling optical wavefront and for correcting optical aberrations. Deformable mirrors are used in combination with wavefront sensors and real-time control systems in adaptive optics, and are also finding a new use in femtosecond pulse shaping.

Deformable mirrors may be controlled by discrete actuators. Actuator pitch is the distance between actuator centres. Deformable mirrors with large actuator pitch and large number of actuators are bulky and expensive.

Actuator stroke is the maximum possible actuator displacement and is usually defined with respect to a central null position. Stroke typically ranges from ±1 to ±10 µm. The actuator stroke limits the maximum amplitude of the corrected wavefront, while the inter-actuator stroke limits the maximum amplitude and gradients of correctable higher-order aberrations.

The "influence function" is the characteristic shape corresponding to the mirror response to the action of a single actuator. Different types of deformable mirror have different influence functions, and the influence functions can be different for different actuators of the same mirror. An influence function that covers the whole mirror surface is called a "modal" function, while a mirror with a localized response has a "zonal" function.

Actuator coupling shows how much the movement of one actuator will displace its neighbours. All "modal" mirrors have large cross-coupling. In some applications this is desirable as it secures high quality of correction of smooth low-order optical aberrations which in many cases have the highest statistical weight.

A deformable mirror usually has many degrees of freedom. Typically, these degrees of freedom are associated with the actuators and in many cases each actuator will correspond with one degree of freedom. To correct for an arbitrary wavefront distortion, or to correct for distortion across an arbitrarily large mirror surface, will require a correspondingly large number of actuators.

The shape of the deformable mirror should be controllable at a speed sufficient to compensate for the expected dynamic aberrations in an optical system. In practice, the deformable mirror shape should be changed at a speed much faster than that of the expected aberrations, as the correction process may take several iterations. For this reason, it is desirable in many applications to maximise the speed of the actuator response.

The cost of conventional deformable mirror systems, for a given desired response speed, have tended to increase exponentially with the number of actuators and the associated control electronics.

Segmented deformable mirrors are formed by independent flat mirror segments. Each segment can move a small distance back and forward to approximate the average value of the wavefront over the patch area. Normally these mirror segments have little or zero cross-talk between actuators. Stepwise approximation works poorly for smooth continuous wavefronts. Sharp edges of the segments and gaps between the segments contribute to light scattering and diffraction from the segment edges. Considerable improvement of the approximation performance of the segmented mirror can be achieved by introduction of three degrees of freedom per segment.

Continuous deformable mirrors with discrete actuators are formed by the front surface of a thin deformable plate. The shape of the plate is controlled by a number of discrete actuators that are fixed to its back side. The shape of the mirror depends on the combination of forces applied to the plate, boundary conditions (the way the plate is fixed to the mirror) and the geometry and the material of the plate. These mirrors are considered to be the best, as they allow smooth wavefront control with very large - up to several thousands - degrees of freedom.

A bimorph deformable mirror is formed by two or more layers of different materials including, for example piezoelectric or electrostrictive active layers bonded to a passive mirror substrate. The mirror is deformed when a voltage is applied to one or more electrodes patterned on the active layer, causing this layer to extend laterally, in a piezoelectric material layer as a result of the transverse piezoelectric effect, which results in local mirror curvature due to the mirror substrate being bonded to the active layer. Conventional bimorph mirrors are rarely made with more than 100 electrodes.

The term "bimorph" is often associated in the art with a deformable mirror structure comprising a single active (piezoelectric) layer bonded to a passive substrate carrying the reflective surface of the mirror. However, strictly speaking, such a mirror structure is a "unimorph" deformable mirror structure. A true "bimorph" comprises two active layers, for example two piezoelectric layers with a common intermediate electrode layer, bonded to a passive mirror substrate. Conventionally, the two piezoelectric layers are poled in opposite directions so that one expands and one contracts when a voltage is applied..

Micro-electrical mechanical system (MEMS) deformable mirrors are fabricated using micro-fabrication techniques of the integrated circuit industry, and so have a great potential to reduce manufacturing costs. Such mirrors may have many thousands of actuators. Many configurations are possible, but these generally rely on electrostatic attraction to deform a very thin beam or membrane. A membrane deformable mirror is formed by a thin conductive and reflective membrane stretched over a solid flat frame. The edge-supported membrane can be deformed electrostatically by applying control voltages to electrostatic electrode actuators that can be positioned near the back surface of the membrane. It is possible to operate the mirror with only one group of electrodes positioned under the mirror. In this case a bias voltage is applied to all electrodes, to make the membrane initially spherical. The membrane can move back and forth with respect to the reference sphere.

Most current deformable mirror structures, whether bimorph based or MEMS based, are based on the use of individually addressed active elements, each one of which needs its own dedicated high voltage driver. This configuration is not difficult to implement when the number of elements is relatively low, but when several hundred elements need to be separately addressed, the requirement for a separate driver for each adds significantly to the cost and complexity of the system.

Some of the potential users of high order adaptive optic systems are considering the use of deformable mirrors with tens of thousands of elements. Under these conditions, and especially where the element density is very high, a separate interconnect to each element becomes a major issue. Even where the device employs integrated drivers, the individual routing to each element can become difficult. If deformable MEMS mirrors follow the route taken by very high resolution liquid crystal displays, one way to solve this problem will be to employ an active matrix addressing scheme. However, this solution does come with its own set of problems. Capacitative coupling between, and resistive losses in, array bus electrodes can degrade the electrical information that controls each element. This can result on a degradation of the linearity of the actuator movement. While this loss in linearity is likely to be low in percentage terms, there are some applications where the linearity needs to be very good, for example better than 0.5 %. This will be difficult to achieve with an active matrix addressing scheme, especially for electrostatic MEMS devices where the actuator response is quadratic. The more complex implementations, which include the use of two or more integrated transistors to improve the device linearity, can offer a more linear and simple solution to this problem, but at the cost of increased electronic complexity.

### SUMMARY OF THE INVENTION

According to a first aspect of the present invention, there is provided an apparatus for deforming a deformable mirror, comprising:
- a deformable mirror having at least one reflective mirror surface;
- a plurality of electrically activatable deforming means for moving said reflective mirror surface(s) in order to deform said mirror; and
- a plurality of photodetectors for converting optical radiation incident on said photodetectors into corresponding electrical signals;
wherein said photodetectors, deforming means and mirror are mechanically integrated and said photodetectors are individually optically addressable by means of optical radiation incident on said photodetectors and are arranged to provide said electrical signals to said deforming means so that said mirror may be controllably deformed in response to said incident optical radiation.

The optical radiation need not be visible optical radiation, as the optical radiation may be infra-red or ultraviolet radiation.

In preferred embodiments of the present invention, the apparatus includes a common supporting substrate. The mechanical integration can then be provided by this substrate. It is particularly advantageous if the substrate is a flexible substrate, for example a material formed as a flexible web. The substrate may then flex in response to the activation of the deforming means.

The substrate may be a planar substrate, that is, having substantially parallel opposite sides.

Each photodetector will in general have at least one photosensor element, for example a photoconductor or a photodiode, and associated electronic circuitry for generating the electrical signal for the deforming means. The photosensor and circuitry are then conveniently integrated on the substrate. This integration may be either all on the same side of said substrate, or the photosensor and associated circuitry may be split across opposite first and second sides of the substrate. In either case, the substrate may have electrical vias or circuit tracks connecting the opposite sides of the substrate.

In most embodiments of the present invention, the deforming means and photodetectors are supported on opposite sides of the substrate. The photodetectors may then be arranged to receive optical radiation incident from the side of substrate on which the photodetectors are mounted.

In alternative embodiments of the present invention, the substrate may have a plurality of optical paths for conveying optical radiation incident on one side of the substrate towards the opposite side. The photodetectors can then be supported on the first side of the substrate and be arranged to receive via said optical paths optical radiation incident from the second side of said substrate. The optical paths could be provided by using a transparent substrate, or by having portions of the substrate transparent or by providing light guides or holes in the substrate through which optical radiation can pass.

The apparatus may comprise at least one source of optical radiation, and means for selectively providing this optical radiation to the photodetectors.

The apparatus may also comprise scanning means for spatially scanning the optical radiation in order to selectively provide the optical radiation to the photodetectors.

Alternatively, the apparatus may comprise separate sources of optical radiation, for example one source for each one of the photodetectors, together with means for individually activating each of these sources of optical radiation in order to selectively provide optical radiation to the photodetectors.

It is a particular advantage if the, or each, source of optical radiation is remote from the photodetectors, as this takes full advantage of remote optical addressing of the photodetectors in the control of the deformable mirror.

The photodetectors may be arranged in any convenient pattern, but will most commonly be arranged in a regular array in order to provide the desired control over the deformable mirror surface profile.

The deforming means may comprise any suitable type of actuator, be it a discrete actuator or another type activatable element, for example a piezoelectric transducer (PZT) or an electrostrictive element, or an electrostatic MEMS type transducer or, in a unimorph or bimorph mirror structure, a region of an active layer, e.g. of piezoelectric material, that is energised by one or more a corresponding electrodes. The present invention is applicable to both modal and zonal types of deformable mirror.

The deforming means may include a plurality of actuators, these actuators being linked mechanically to move the reflective mirror surface(s) in order to deform the mirror.

According to a second aspect of the present invention, there is provided a method of deforming a deformable mirror, said mirror having at least one reflective mirror surface, and integrated with the mirror surface a plurality of electrically activatable deforming means and a plurality of photodetectors, the method comprising:
- selectively directing optical radiation onto said photodetectors to generate corresponding electrical signals; and
- providing said signals to said deforming means in order to controllably deform said mirror surface in response to said incident optical radiation.

### BRIEF DESCRIPTION OF THE DRAWINGS

Preferred embodiments of the present invention will now be further described, by way of example, and with reference to the accompanying drawings, in which:
Figure 1 is a schematic diagram showing a portion of an apparatus for deforming a deformable mirror according to a first embodiment of the invention, having surface mount photodetector components including a photodiode which may be optically addressed to activate a bimorph PZT actuator affixed to a deformable mirror;
Figure 2 is a circuit diagram illustrating the operation of the apparatus of Figure 1;
Figure 3 is a circuit diagram showing an improved variation on the circuit of Figure 2, having a voltage source follower arrangement of transistors between the photodiode and the actuator;
Figure 4 shows an equivalent circuit to that of Figure 3 with an additional transistor to reduce the voltage change across the photodiode;
Figure 5 is a schematic diagram showing a portion of an apparatus for deforming a deformable mirror according to a second embodiment of the invention, in which photodetector components including a photodiode are mounted on the same side of a supporting substrate as the actuator, in an electrostatically actuated modal MEMS type of deformable mirror;
Figure 6 is a schematic diagram showing a portion of an apparatus for deforming a deformable mirror according to a third embodiment of the invention, similar to Figure 5, in an electrostatically actuated zonal MEMS type of deformable mirror;
Figure 7 shows how the component arrangement of Figure 1 may be adapted for use in an edge supported modal bimorph type of deformable mirror in a fourth embodiment of the invention; and
Figure 8 shows how the component arrangement of Figure 1 may be modified for use in a zonal bimorph type of deformable mirror in a fifth embodiment of the invention.

### DETAILED DESCRIPTION

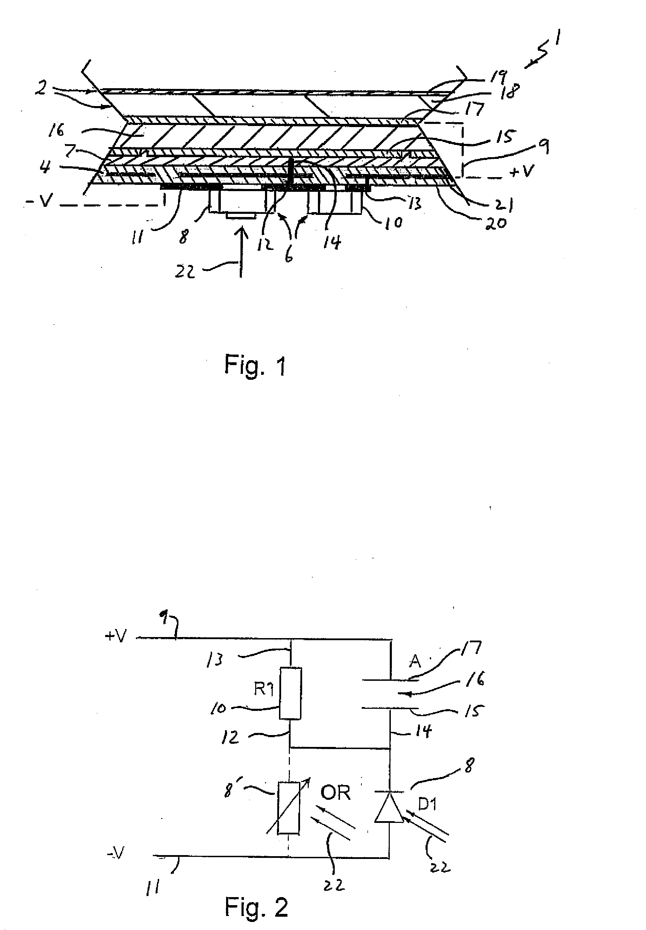

Figure 1 shows a portion of an apparatus 1 for deforming a deformable mirror 2 and Figure 2 shows the equivalent electronic circuit layout The apparatus has a substrate in the form of a flexible printed circuit carrier 4 on which are mounted surface mount photodetector components 6 including a photosensor 8 and a resistor (R1) 10. As shown in Figure 1, the photosensor is preferably a photodiode (D1) 8, but as indicated by Figure 2 could alternatively be provided by a discontinuous or segmented photoconductive element or layer 8'.

The flexible circuit substrate may be a polyimide film, such as that sold by DuPont Electronics under the registered trademark Kapton.

The photodetector components 8, 10 are mounted on a first side 20 of the carrier 4, on which are also printed a number of conductors, including a conductor 11 providing a negative supply voltage (-V) to the anode of the photodiode, a conductor 12 connecting the diode cathode to one side of the resistor 10, and a conductor 13 connecting the other side of the resistor 12 to a positive supply voltage (+V) 9.

A via 14 connects the conductor 12 through the flex substrate 4 to a conductor layer 15 bonded to a second side 21 of the substrate 4 by an intervening layer of epoxy adhesive 7. The conductor layer 15 is segmented into electrically separate areas across the second side 21, and is in contact with one side of a deforming means which includes a PZT actuator layer (A) 16. The actuator layer (A) 16 may be continuous, as shown, or alternatively may be formed from discrete elements, each with its own conductor layer.

The other side of the PZT layer is coated with a continuous common electrode 17 which is electrically connected, for example at an edge of the apparatus, to the positive supply +V.

The deformable mirror 2 is formed from a mirror substrate, for example a thin flexible glass layer 18, one side of which is in contact with the common electrode 17, and the other side of which is coated with a reflective metal alloy 19, for example a gold alloy.

The actuators 16 and photodetectors 8, 10 are supported in common by the supporting substrate 4, which also supports the mirror indirectly via the actuators 16, with the result that photodetectors, actuators and mirror are mechanically integrated.

This arrangement can be repeated across the deformable mirror apparatus, for example in a two-dimensional array.

The intensity of optical radiation 22 incident on the photosensor 8, 8' will determine the current through the photosensor, and therefore the fraction of the full bias voltage that is applied to the actuator element 16.

When optical radiation 22 is incident on a photoconductor layer 8', the resistance of the photoconductor layer falls by about a factor of up to about 100, resulting in a consequent increase in the current which may flow through the series photoconductor and resistor. Current through the photoconductor 8' is converted into a voltage by the series resistor 10, and this voltage can be used either directly or indirectly to activate the actuator 16.

There are a number of advantages to segmenting the drive electrode 15 and photosensor 8, 8' in this way. Each of the segmented elements can be addressed separately by controlling the incident optical radiation 22. The individual capacitance of each actuator element 16 is smaller, which improves the response speed of the device. When using a photoconductor 8', because the resistor 10 is in parallel with each PZT element 16, the effective resistance of the parallel PZT element 16 and resistor 10 can be tuned to match the change in resistance of the photoconductor layer 8'. Without the resistor 10, it would be very difficult to match the resistance of a photoconductive layer 8' to that of the actuator element 16, and would therefore limit the construction options for the deformable mirror device 1.

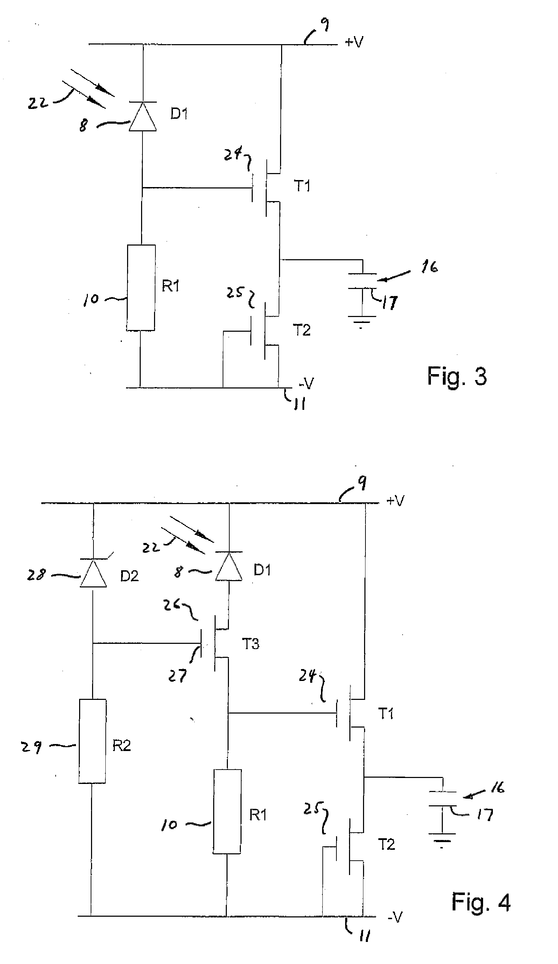

A more sophisticated approach using a photodiode 8 is shown schematically in the circuit diagram of Figure 3, in which components equivalent with those of Figure 2 are indicated using the same reference numerals. This circuit arrangement places a source follower circuit comprising two FET transistors (T1, T2) 24, 25 between the connection between the series photodiode 8 and resistor 10 and the PZT actuator 16. This would improve the response speed of the system, and reduce the risk of feedback from other elements. The current passed by the photodiode 8 produces a voltage across the resistor 10 linearly proportional to the incident optical radiation 22. If required, the common terminal 17 of the actuator can, as illustrated, be connected mid way between the positive and negative supply voltages 9, 11 to provide both positive and negative voltages to the actuator 16.

An advantage of the arrangement shown in Figure 3 over that of Figure 2 is that If the current available from the photodiode 8 on its own is insufficient to provide an adequate response speed of the device, then this photodiode current can be used to drive the source follower circuit 24, 25 which will provide a much higher current to improve the response speed.

Figure 4 shows an additional enhancement over Figure 3 to improve the linearity of the circuit by reducing the voltage change across the photodiode 8 over the full range of input optical power 22. This is achieved by the addition of a further FET transistor (T3) 26, the gate 27 of which is biased by a voltage set by a voltage divider comprising a Zener diode (D2) 28 in series with a resistor (R2) 29 spanning the supplied voltage 9, 11. In this circuit, the additional transistor 26 will adjust its impedance as the photodiode current changes to maintain the voltage drop across the photodiode 8.

Although not illustrated in the drawings, reduced quiescent current could be achieved by replacing the source follower stage (24, 25) with a class S or class AS Push-Pull source follower.

Even better linearity and control could be achieved by increasing the complexity of the integrated drive circuit further, if this were required in any particular application of the deformable mirror apparatus.

In all the above circuits, the resistor 10 could be replaced with a capacitor to provide a voltage proportional to the integral of the incident optical radiation. This would enable the device to operate with time-multiplexed input optical radiation.

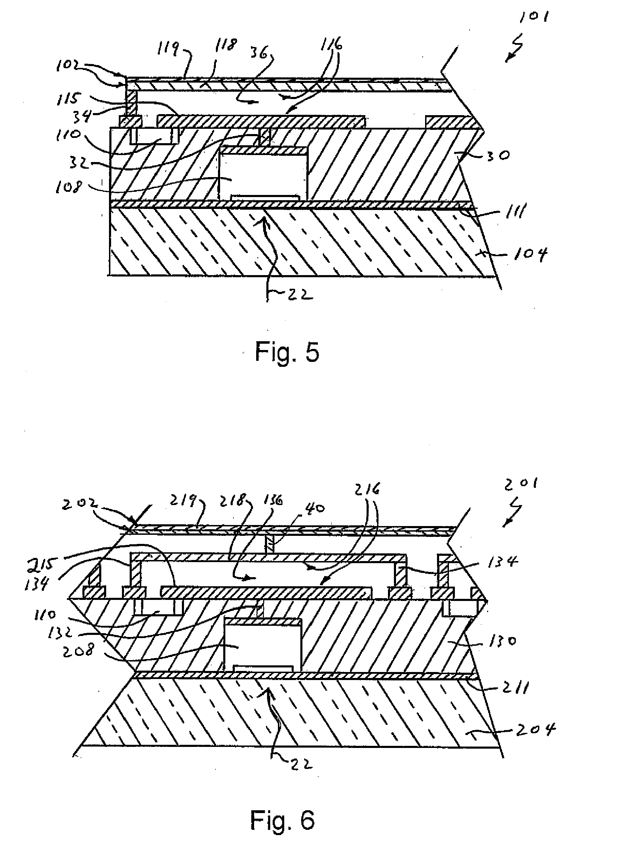

In further embodiments of the invention, portions of which are shown schematically in Figures 5 and 6, the deformable mirror apparatus 101, 201 employs a deforming means based on electrostatic actuation 116, 216 in a MEMS type deformable mirror segment. These embodiments make use of the optically addressable integrated photodetector circuits described above. In Figure 5 components similar to those of Figure 1 are indicated using reference numerals incremented by 100, and in Figure 6 are indicated using reference numerals incremented by 100 over those of Figure 5.

Because such devices 101, 201 are fabricated using standard micro-fabrication methods, the inclusion of components such as resistors 110, 210, capacitors or transistors in the fabricated MEMS assembly requires only relatively simple additional fabrication steps.

One way of constructing the devices illustrated in Figures 5 and 6 would be to provide a thin film transparent ITO electrode 111, 211 deposited onto a rigid glass substrate 104, 204, which supports the deformable mirror apparatus 101, 201. As an example, Figure 4 shows schematically a possible implementation of the invention integrated into a membrane type deformable mirror 102 having a reflector surface 119 deposited on a thin conductive membrane 118. A photodiode 108 is used as the optically sensitive element.

The photodiode 108 is provided on one side of an insulating layer 30 which abuts the ITO layer 111. A via 32 extends through the insulating layer 30 to connect the photodiode 108 with a first electrode 115 for the electrostatic actuator 116 which extends across a discrete area of the insulator 30.

The electrode 115 is connected to the resistor 110, which is also surface mounted on the insulator 30, and the other side of the resistor is connected to the conductive membrane 118 through a conductive edge support 34 for the deformable mirror 102.

A voltage generated across a gap 36 between the parallel electrodes causes the flexible deformable mirror 102 to deform in a modal manner towards the fixed electrode 115 on the insulating layer 30.

Figure 6 shows a portion of a zonal deformable mirror apparatus 201, which differs from the modal apparatus of Figure 5 in that there are a number of discrete, separate electrostatic actuators 216, each one of which has a movable membrane electrode 218 connected through an insulating post 40 to a deformable mirror 202. Each actuator has its own movable electrode 215 and is supported at its edges by a conducting post 134, one end of which is connected to one side of a resistor 110, in a similar circuit arrangement with a photodiode 208, and with a similar physical arrangement with insulating layer 130, ITO layer 211 and rigid glass substrate 204 as described above in relation to Figure 5.

Similar electrical schemes could be used to address PZT bimorph deformable mirrors where the circuit and component integration could take place on the PZT element itself. This can be achieved using techniques described in patent document WO 2005/124425 A2, which is concerned with the use of deposition and passivation layers on bimorph deformable mirrors. Photodiodes and transistors could also be deposited by thin film techniques directly onto the PZT element, however, this would involve elevated temperatures above the Curie temperature of the PZT element, and consequently the PZT would need to be re-poled after the deposition process. The most straightforward implementation would be to integrate the circuit components identified in Figures 2, 3 or 4 onto an integrated flexi-circuit. This integration could be in the form of discrete surface-mount components, or in the form of wire-bonded bare chip devices. The flexi-circuit would then be used both to directly address and to drive the PZT elements.

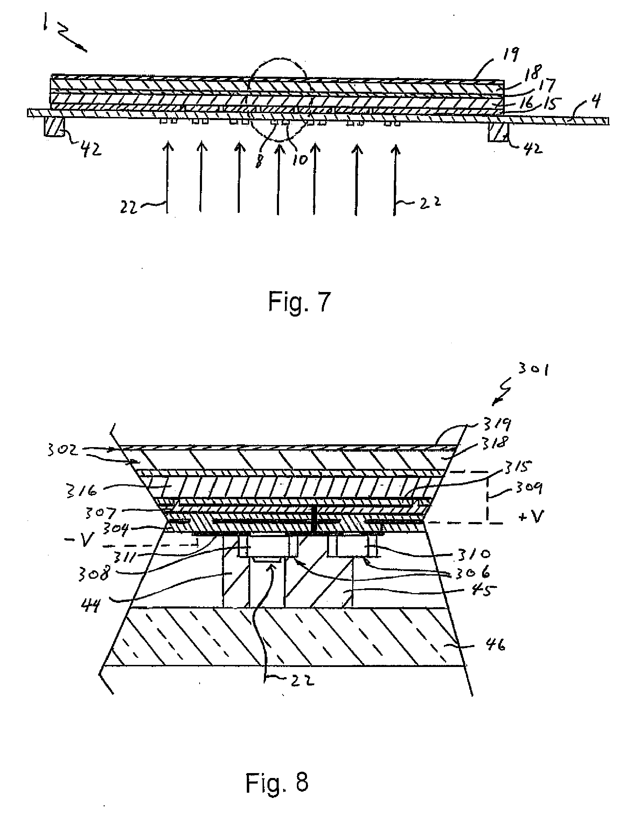

An example of such an arrangement is shown schematically in Figure 7. As indicated by the dashed oval outline, this is composed of the repeated blocks of components initially described above with reference to Figure 1 to form an optically-addressable bimorph deformable mirror apparatus 1. Here, the deformable mirror structure 2 is edge supported 42, and so is a modal deformable mirror. Such modal bimorph deformable mirrors will typically have less than 200 actuator elements. An optically-addressed version of this device would be relatively simple to achieve, as the edge support arrangement provides the advantage of leaving the centre of the mirror apparatus 1 open for the incident optical radiation 22 used to individually address the individual photodetector elements 8.

Zonal bimorph deformable mirrors can also benefit from the invention, which can make it easier to increase the number of actuator elements up to thousands of elements. An example of a portion of such a mirror apparatus 301 is shown in Figure 8, where components the same as those of Figure 1 are indicated using reference numerals incremented by 300.

The photodetector and actuator structure supporting the deformable mirror 302 is itself supported on a number of flexible or compliant posts 44, 45 fixed to a transparent non-deformable substrate 46. The posts 44, 45 may be formed from a rubber material. The size and spacing of such posts can be varied to obtain the desired zonal mechanical response in the deformable mirror 302, for example as described in patent document WO 05/040885 A2. With such an arrangement it is possible to achieve better than 80 % isolation between adjacent actuator sections of the deformable mirror.

As an alternative, the posts could be replaced with a local transparent rubber compliant layer, one for each actuator which locally deforms in response to the actuator movement. In this case the transparent rubber layer could overlie the photodetector, so that would be no need to align an optical aperture with the photodetector layer.

A zonal bimorph mirror such as this is interesting in many applications owing to the potentially high response frequency. The resonant frequency of a circular edge supported bimorph mirror, which roughly speaking sets the maximum drive frequency, drops as the diameter squared. Therefore a large diameter zonal bimorph mirror such as that for which a portion is shown in Figure 8 would have a significantly higher response frequency than a similarly sized modal bimorph mirror.

As an alternative to the embodiments described above, the compliant support itself could be transparent, or at least have transparent optical paths through the substrate so that the photodetector components could be mounted in the same side as the actuator and deformable mirror elements. Optical radiation incident on the opposite side could then still be used to address individually each of the photodetector elements.

In a further alternative, if the mirror has some transmittance, or gaps where optical radiation can pass by an edge of the mirror, then the photodetector components could be mounted in the same side as the actuator and deformable mirror elements, with the controlling optical radiation being incident on the same side as the deformable mirror elements.

In either of these cases, there is no need for an aperture within the edge support for the access of the addressing optical radiation.

Although not illustrated, a number of different of optical-addressing techniques could be used. The optical radiation could be directed to each photodetector element using an optical beam scanner. The optical radiation could be addressed to the deformable mirror via a spatial light modulator, for example a liquid crystal display.

Depending on the capacitance of each actuator element, it may be necessary to provide a storage capacitor for each pixel to at as a storage capacitor and enhance the persistence, especially if a single beam is used.

Therefore, the resistor that is in parallel with the actuator may be replaced with a capacitor to store up charge from the photodetector element. The capacitor may be provided, either on its own, or in parallel with a higher value resistor which permits the charge to leak away when the photodetector is not being optically addressed. The total amount of charge will depend on both the potential across the actuator and the length of time that the illumination is incident on the photoconductor. Since both the bimorph and MEMS elements are essentially capacitive in nature and as such are charge driven, the amount of deflection could therefore be controlled by how long the optical beam addresses the pixel; longer addressing times will result in more charge. Alternatively or additionally, the amount of deflection caused by the actuator could also be controlled by the intensity of the scanning beam.

In order to simplify the optical system, the addressing of the pixels could be multiplexed to reduce the number of light beams used to address the device. For example, the deformable mirror apparatus could be addressed directly by the output stage of an optical processor.

As described previously, current deformable mirror structures often require the use of individually addressed actuator elements, each one of which needs its own dedicated high voltage driver. This configuration becomes difficult and costly to implement when several hundred elements need to be separately addressed. The various embodiments of the optically addressed deformable mirror apparatus described above remove the requirement for separate electrically addressable drivers in proximity with the deformable mirror, and can provide a very cost effective solution for high order systems.

The light addressed technique described above eliminates the need for a separate electrically addressable driver for each deformable mirror element. This potentially simplifies not only the driving scheme, but can also simplify the feedback control of a deformable mirror based adaptive optic system. An optical address technique can also be used in an optical feedback system and potentially reduce the large amount of parallel processing that would otherwise be needed to calculate the required feedback signals to the deformable mirror electrodes.

The use of addressing using optical radiation will significantly reduce the number of connections required by the deformable mirror apparatus. This will be especially useful in applications where it will be more difficult to connect to the deformable mirror, for example where this is mounted on a tip-tilt platform or for space based telescopes. Because each element is being addressed separately, this technique will also provide a much better linearity than a matrix addressed scheme, where cross-talk between bus electrodes can limit the linearity that can be achieved.

Conventional approaches to providing a large number of individually addressed active elements result in significant cost and complexity. The various embodiments of discrete, optically addressable deformable mirror elements described above remove the requirement for separate electrically addressable drivers, and can provide a very cost effective solution for optical correction, particularly in high order adaptive optic systems.

## Claims

1. An apparatus for deforming a deformable mirror, comprising:
- a deformable mirror having at least one reflective mirror surface;
- a plurality of electrically activatable deforming means for moving said reflective mirror surface(s) in order to deform said mirror; and
- a plurality of photodetectors for converting optical radiation incident on said photodetectors into corresponding electrical signals;
wherein said photodetectors, deforming means and mirror are mechanically integrated and said photodetectors are individually optically addressable by means of optical radiation incident on said photodetectors and are arranged to provide said electrical signals to said deforming means so that said mirror may be controllably deformed in response to said incident optical radiation.

2. An apparatus as claimed in Claim 1, in which the apparatus includes a common supporting substrate, said mechanical integration being provided by said substrate.

3. An apparatus as claimed in Claim 2, in which said substrate is a flex substrate.

4. An apparatus as claimed in Claim 2 or Claim 3, in which said substrate is a planar substrate.

5. An apparatus as claimed in any one of Claims 2 to 4, in which said substrate is a printed circuit substrate.

6. An apparatus as claimed in any one of Claims 2 to 5, in which each photodetector comprises at least one photosensor element and associated electronic circuitry for generating said signal, said photosensor and said circuitry being integrated on said substrate.

7. An apparatus as claimed in Claim 6, in which said photosensor and said circuitry are integrated on the same side of said substrate.

8. An apparatus as claimed in Claim 6, in which said photosensor and at least some of said circuitry are integrated on opposite sides of said substrate.

9. An apparatus as claimed in any one of Claims 2 to 8, in which said substrate has a first side and an opposite second side, the deforming means and photodetectors being supported on opposite sides of the substrate.

10. An apparatus as claimed in Claim 9, in which said photodetectors are arranged to receive optical radiation incident from the side of substrate on which said photodetectors are mounted.

11. An apparatus as claimed in any one of Claims 2 to 9, in which said substrate has a first side and an opposite second side and plurality of optical paths for conveying optical radiation incident on one side of the substrate towards the opposite side, said photodetectors being supported on the first side of said substrate and being arranged to receive via said optical paths optical radiation incident from the second side of said substrate.

12. An apparatus as claimed in any preceding claim, comprising at least one source of optical radiation, and means for selectively providing said optical radiation to said photodetectors.

13. An apparatus as claimed in Claim 12, comprising scanning means for spatially scanning said optical radiation in order to selectively provide said optical radiation to said photodetectors.

14. An apparatus as claimed in Claim 12, comprising a separate source of optical radiation for each of said photodetectors, and means for individually activating each of said sources of optical radiation in order to selectively provide said optical radiation to said photodetectors.

15. An apparatus as claimed in any one of Claims 12 to 14, in which the or each source of optical radiation is remote from said photodetectors.

16. An apparatus as claimed in any preceding claim, in which said photodetectors are arranged in a regular array.

17. An apparatus as claimed in any preceding claim, in which said deforming means include piezoelectric, electrostatic or electrostrictive elements.

18. An apparatus as claimed in any preceding claim, in which said deforming means include a plurality of discrete actuators, said actuators being linked mechanically to move said reflective mirror surface(s) in order to deform said mirror

19. An apparatus as claimed in any preceding claim, in which said deformable mirror is a modal deformable mirror.

20. An apparatus as claimed in any one of Claims 1 to 18, in which said deformable mirror is a zonal deformable mirror.

21. A method of deforming a deformable mirror, said mirror having at least one reflective mirror surface, and integrated with the mirror surface a plurality of electrically activatable deforming means and a plurality of photodetectors, the method comprising:
- selectively directing optical radiation onto said photodetectors to generate corresponding electrical signals; and
- providing said signals to said deforming means in order to controllably deform said mirror surface in response to said incident optical radiation.
